Europäisches Patentamt

European Patent Office

Office européen des brevets

(19)

(11) Numéro de publication: **0 001 142**
**B1**

(12) **FASCICULE DE BREVET EUROPEEN**

(21) Numéro de dépôt: **78200163.0**

(22) Date de dépôt: **28.08.78**

(51) Int. Cl.³: **B 22 D 39/00, G 05 D 9/12**

(54) Dispositif de commande d'une installation de fonderie

(30) Priorité: **05.09.77 CH 10808/77**

(43) Date de publication de la demande:
**21.03.79 Bulletin 79 06**

(45) Mention de la délivrance du brevet:
**29.10.80 Bulletin 80 22**

(84) Etats contractants désignés:
**CH DE FR GB SE**

(56) Documents cités:
**DE - A - 2 631 015**
**FR - A - 2 345 254**

(73) Titulaire: **MASCHINENFABRIK & EISENGIESSEREI ED. MEZGER AG.**

**Fabrikstrasse 300**
**CH-3283 Kallnach (CH)**

(72) Inventeur: **Lavanchy, Gérard André**
**Avenue de la Rochelle 12**
**CH-1008 Prilly-Lausanne (CH)**
**Rossier, Marc-Henry**
**Chemin de Ballègue**
**CH-1066 Epalingues (CH)**
**CH**
**Mezger, Fritz/Strandweg 107**
**CH-3280 Muntelier (CH)**

(74) Mandataire: **Bovard, Fritz Albert et al Bovard & Cie Ingénieurs- Conseils ACP et Avocats**
**Optingenstrasse 16**
**CH-3000 Berne 25 (CH)**

EP 0 001 142 B1

Courier Press, Leamington Spa, England.

## Dispositif de commande d'une installation de fonderie

Dans les installations de fonderie qui opèrent le remplissage en série de moules individuels en sable ou en coquille, fermés et pourvus d'un entonnoir de coulée à leur partie supérieure, la commande de l'arrêt de la coulée au moment où le moule est plein est importante car elle conditionne la qualité de la pièce moulée, la sécurité, le déroulement régulier des opérations de coulée ainsi que l'économie de métal. En effet, il est décisif que l'arrêt de coulée de la poche ne soit commandée qu'au moment où le moule est effectivement plein afin d'éviter des rebuts par défaut de matière à l'intérieur du moule. Il faut d'autre part, éviter que la commande ne soit effectuée trop tard et que le moule déborde par son entonnoir de coulée, ce qui peut, d'une part, présenter un danger et, d'autre part, exiger l'interruption des opérations de coulée et éventuellement des opérations de dégagement ou de nettoyage de l'aire où la coulée s'effectue. Finalement, l'aspect économique du problème doit également être considéré. En effet, le métal contenu dans l'entonnoir au moment de l'arrêt de la coulée représente généralement une proportion relativement importante du métal de la pièce. Après le démoulage, cette colonne de métal doit être détachée. Elle peut être récupérée et recyclée, mais le coût de la refonte est proportionnel au poids de la matière à recycler, une diminution de cette quantité grâce à un réglage précis de la commande d'arrêt de coulée, représente une diminution importante des frais de fabrication des pièces.

Habituellement, l'arrêt de coulée lorsque le moule est plein est une opération manuelle. Le fondeur détecte visuellement à quel moment le moule est plein en observant les réactions du niveau du métal dans l'entonnoir en fonction du débit du jet tombant de la poche de coulée dans cet entonnoir. Etant donné le temps de la réaction humaine, le métal ne cesse effectivement de couler dans le moule qu'un certain temps après que le remplissage complet a été détecté, de sorte que la commande manuelle du renversement de la poche, de la fermeture de la quenouille ou de la décharge dans le cas des poches à pression conduit toujours à une certaine perte de métal à chaque opération de coulée.

On a déjà cherché à réaliser des dispositifs qui détectent la fin du remplissage et commandent automatiquement l'arrêt de coulée. Toutefois, jusqu'à maintenant ces dispositifs ont toujours relevé des techniques du dosage et exigé une conformation spéciale du moule qui s'assortit mal aux autres exigences de la technique de la fonderie. Ainsi, on a déjà prévu de pratiquer des évents à des endroits judicieusement déterminés dans le moule et d'observer l'apparition du métal dans ces orifices, ce qui signale le remplissage du moule.

Toutefois, il est le plus souvent difficile de réaliser des évents utilisables à cet usage. Les évents sont une cause supplémentaire de consommation de métal, et, pour des raisons relevant de la dynamique des fluides, peuvent avoir des conséquences indésirables sur la qualité des pièces ou même ne pas être réalisables sans difficulté majeure.

On a également prévu (DP 1 242 809) de pratiquer au sommet de l'entonnoir de coulée une sorte de déversoir qui se remplit de métal lorsque le niveau dans l'entonnoir de coulée dépasse une valeur maximale. Toutefois, cette solution connue au problème de l'interruption automatique de la coulée ne permet pas de déceler les cas où le déversoir se remplit avant que le moule ne soit plein par suite de rajaillissement de métal ou par suite de l'irrégularité de l'écoulement de métal de l'entonnoir de coulée vers la cavité du moule.

Le but de la présente invention est de créer un dispositif d'arrêt de coulée qui observe et analyse les paramètres dynamiques du système constitué par le jet s'écoulant de la poche et le contenu de l'entonnoir de coulée afin de détecter à quel moment le comportement de ce système correspond aux conditions de remplissage total du moule et commander le renversement de la poche de coulée, la fermeture de la quenouille ou la décharge d'une poche à pression afin de faire cesser l'écoulement du métal en temps opportun.

Dans ce but, l'invention a pour objet un dispositif de commande d'une installation de fonderie comportant une poche de coulée motorisée et plusieurs moules fermés en sable ou en coquille pourvus d'un entonnoir de coulée à leur partie supérieure, ces moules étant destinés à être remplis successivement par du métal en fusion qui tombe en jet de la poche et forme dans l'entonnoir une accumulation de métal avec une surface libre, caractérisé en ce qu'il comporte au moins deux capteurs mesurant à distance pendant le remplissage respectivement le niveau de ladite surface et le débit du jet et émettant des signaux analogiques correspondant aux valeurs mesurées, un circuit électronique avec au moins deux entrées connectées chacune à un capteur et conduisant les dits signaux analogiques, et des moyens de différentiation de sommation et d'amplification connectés de façon à élaborer un signal de remplissage qui est une combinaison additive des dits signaux analogiques et de leur dérivées, ce signal de remplissage variant fortement quand le métal cesse de s'écouler de l'entonnoir vers l'intérieur du moule, une commande d'interruption de coulée susceptible d'être enclenchée ou déclenchée et qui, à l'état enclenché commande la poche motorisée de façon à provoquer l'interruption rapide et forcée du jet, et une connexion entre le circuit et la commande d'interruption de coulée agencée de façon que le signal de remplissage provoque l'enclenchement de ladite commande quand il dépasse un seuil déterminé.

On va décrire ci-après, à titre d'exemple, deux formes de réalisation du dispositif selon l'invention en se référant au dessin annexé dont :

la fig. 1 est une vue en élévation schématique partiellement coupée montrant une installation de fonderie prévue pour le remplissage en série de moules en sable à partir d'une poche de coulée à renversement,

la fig. 2 est une schéma-bloc du dispositif de commande de cette installation, et

la fig. 3 est un schéma-bloc du circuit électronique d'une seconde forme d'exécution du dispositif de commande.

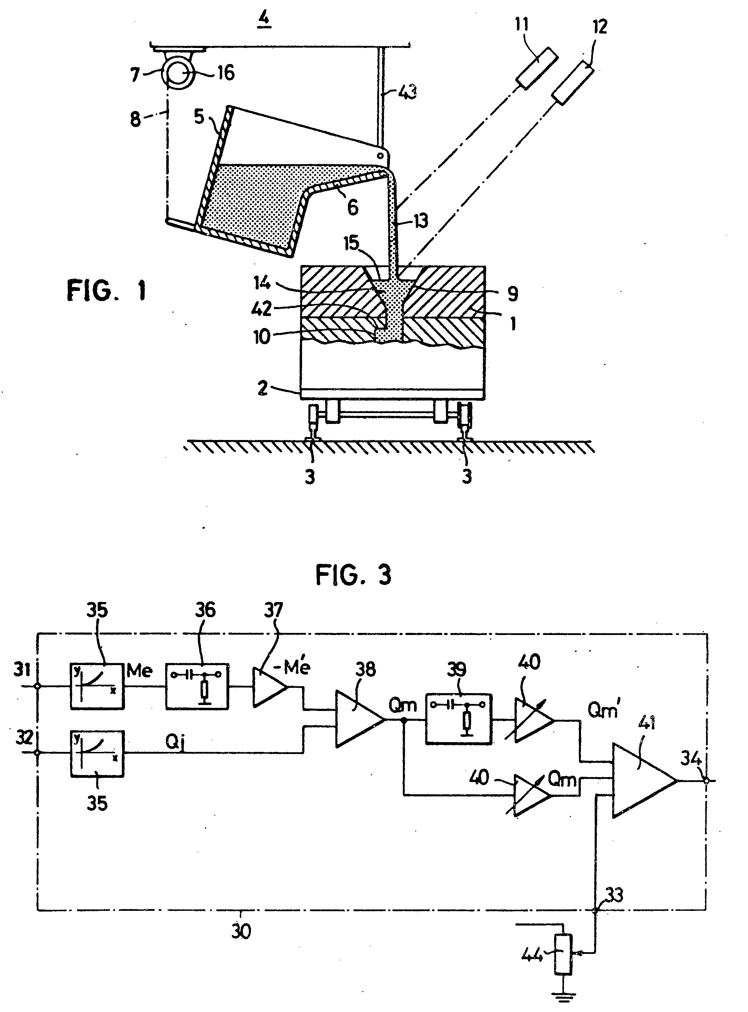

On voit à la fig. 1, un moule en sable 1, porté par un chariot 2 qui se déplace sur des rails 3. Au-dessus des rails 3, est situé un système de levage 4, auquel est suspendue une poche de coulée 5 à déversoir 6 dont l'inclinaison et le renversement sont commandés par un moteur 7 et par une chaîne 8 reliant la pouche au moteur. Comme on le voit à la fig. 1, le moule 1 présente un entonnoir de coulée 9 dont l'extrémité supérieure est de forme généralement et approximativement tronconique et qui fait communiquer verticalement la face supérieure du moule 1 avec la cavité 10 dont la forme est celle de la pièce à mouler.

Deux capteurs 11 et 12 observant en permanence le comportement dynamique du système formé par le jet de métal 13 qui s'écoule du déversoir 6 et la quantité de métal 14 qui a pénétré dans l'entonnoir de coulée et qui présente un niveau libre 15. On se rend compte que les variations du niveau 15 dépendent de la différence entre le débit du jet 13 et le débit de métal qui s'écoule vers la cavité 10 à partir de l'entonnoir 9. Le capteur 11 est disposé à distance raisonnable (par exemple 2 à 5 m) du moule et de la poche, de façon à fournir un signal de débit qui est proportionnel à la largeur du jet 13 vu depuis l'emplacement où se trouve ce capteur 11. De même le capteur 12 qui sera volontiers disposé au voisinage du capteur 11 émet un signal qui correspond au niveau 15. En fait, ce signal sera fonction de l'aire de la surface libre de la colonne de métal 14. Comme l'entonnoir est de forme tronconique, on se rend compte qu'il y a une relation biunivoque entre la hauteur du niveau 15 et cetta aire.

Les capteurs 11 et 12 sont des capteurs photo-sensibles qui réagissent au rayonnement visible et/ou thermique du métal en fusion. Chaque capteur comporte un orange sensible et un système optique qui forme sur un écran devant l'organe sensible une image réelle de la portion de métal qu'il doit mesurer. Ainsi, si l'image formée devant l'organe sensible du capteur 11 est celle d'une longueur définie du jet 13, l'intensité lumineuse de cette image sera proportionnelle à la largeur du jet. Le signal émis par le capteur 11 sera donc proportionnel à cette largeur. De même, le signal de sortie du capteur 12 sera proportionnel à l'aire de la surface libre de la colonne de métal 14. Les capteurs utilisés ici sont des objects connus en soi. Il ne sera donc pas nécessaire de les décrire en détail. On trouvera par exemple une description de ces objets dans la demande de brevet français 2345254

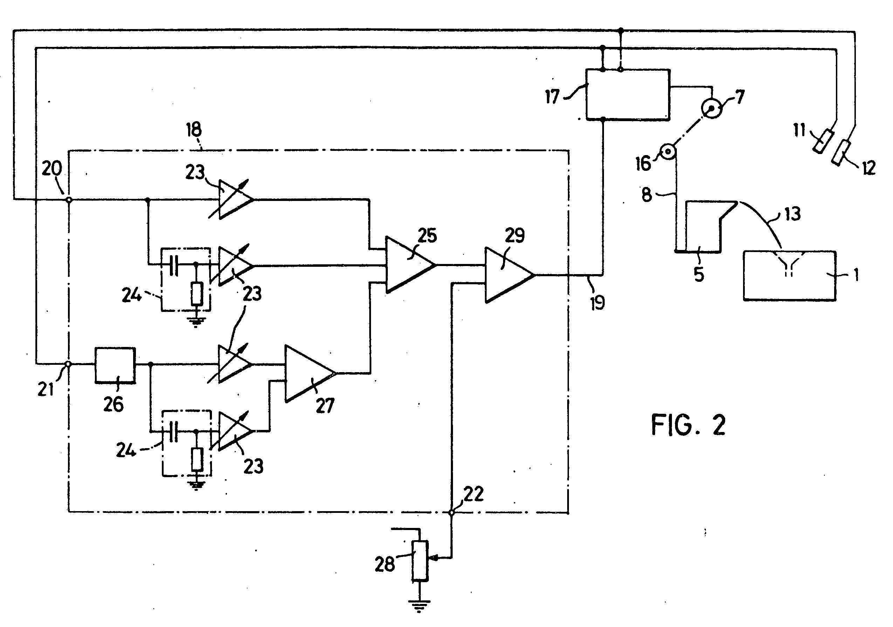

On voit à la fig. 2, un schéma général du dispositif de commande. On reconnaît sur cette figure les deux capteurs 11 et 12, une poche de coulée à renversement 5 avec sa chaîne de commande 8 qui s'enroule sur un treuil 16 entraîné par le moteur 7. On reconnaît également le moule 1 représenté schématiquement. En outre, le dispositif comprend des circuits électroniques qui, pour la clarté de l'exposé, sont divisés ici en deux circuits 17 et 18. Le circuit 17 qui ne sera pas décrit en détail est un circuit de réglage automatique qui asservit en permanence le débit du jet 13 lors de la coulée. Les particularités de ce circuit sont décrites notamment dans la demande de brevet précitée. Ce circuit n'est toutefois pas indispensable à la réalisation de la présente invention et pourrait également être omis. Le second circuit, représenté à la fig. 2, et désigné par 18, élabore le signal d'arrêt de coulée lorsque le moule est plein. Ce signal est émis dans la ligne 19 et passe par le circuit 17 pour commander une rotation rapide du moteur 7 dans le sens qui provoque le redressement de la poche 5. Comme on l'a dit précédemment, ce signal d'arrêt de coulée est élaboré à partir de trois signaux d'entrée qui parviennent au circuit par les entrées 20, 21 et 22 et qui consistent le premier en un signal de niveau, le second en un signal de débit et le troisième en un signal de consigne. Le signal de niveau 20 est conduit à l'un des amplificateurs à gain variable 23 ainsi qu'à un circuit différenciateur 24, qui fournit à sa sortie un signal proportionnel à la dérivée dans le temps du signal de niveau. Ce signal de dérivée est également conduit à l'un des amplificateurs à gain variable 23 et tous deux alimentent un circuit sommateur 25, auquel est également conduit un signal de signe inverse à celui du signal élaboré à partir de l'information fournie par le capteur de débit 11. Cette information parvient par l'entrée 21, entre dans un circuit 26 qui élève le signal d'entrée au carré afin de produire un signal proportionnel à la section du jet, c'est-à-dire au débit de métal s'écoulant de la poche. Dans une autre réalisation du dispositif, le signal de section est obtenu par l'utilisation de deux capteurs orientés perpendiculairement l'un à l'autre, le circuit 26 étant alors utilisé en multiplicateur analogique. Le signal proportionnel au débit est également introduit, d'une part, dans un amplificateur à gain variable 23, et d'autre part, dans un différenciateur 24, dont la sortie est connectée à un quatrième amplificateur à gain variable 23. Les deux signaux qui constituent les éléments du signal de débit, c'est-à-dire le signal proportionnel au débit proprement dit et celui qui est proportionnel à sa dérivée dans le temps, sont conduits à un sommateur inverseur 27 dont la sortie est connectée à la troisième entrée du sommateur 25 comme on l'a dit précédemment.

On comprend ainsi que le signal sortant du sommateur 25 est un signal de remplissage découlant par interprétation de l'observation simultanée du débit du jet 13 et du niveau de métal 15. En effet, tant que règnent des conditions de stabilité, le débit du jet 13 est égal ou approximativement égal au débit de la colonne 14 et le niveau est fixe. Les signaux dérivés sont nuls et, du fait de l'inversion qui a lieu dans le sommateur 27, le signal issu du sommateur 25 est de signe opposé à celui obtenu lorsque le moule parvient à l'état de remplissage. Ces conditions normales durent jusqu'au moment où le remplissage se termine, l'état de remplissage du système étant alors immédiatement détecté par le fait que le niveau 15 s'élève. Non seulement, le signal fourni par le capteur 12 augmente d'intensité, mais il apparaît un signal de dérivée, de sorte que le signal de remplissage augmente très rapidement.

D'autre part, le débit de la poche diminue. En effet si, comme dans l'exemple pris ici, l'installation est équipée d'un dispositif de réglage automatique 17, l'élévation du niveau dans l'entonnoir de coulée provoque un ordre de réduction du débit, de sorte que la poche tend à se redresser lentement, ce qui fait diminuer le débit. Le signal émis par le capteur 11 diminue et, en outre, il apparaît dans le circuit 24, connecté entre les circuits 26 et 27, un signal de dérivée qui est négatif puisque le débit diminue et, du fait de l'inversion de signe dans le sommateur 27, le signal qui vient s'ajouter à la troisième entrée du sommateur 25 est fortement accru. Toutefois, si aucun circuit de réglage automatique n'est prévu dans l'installation, le fondeur qui surveille le déroulement de l'opération détecte visuellement l'élévation du niveau et tend à redresser la pouche ou à fermer la quenouille par une commande manuelle. Bien entendu, cette commande est une commande fine qui implique de petites modifications de l'inclinaison de la poche mais qui ne provoque pas l'interruption rapide de l'écoulement du métal que l'on doit avoir dès que le remplissage total du moule a été détecté. Or, ce remplissage est effectivement détecté d'une façon tout à faut univoque grâce à l'apparition du signal de sortie du sommateur 25. Ce signal augmente fortement dès que les conditions qui correspondent au remplissage effectif du moule sont réunies. Il suffit que l'élément de référence 28, constitué par exemple par un diviseur potentiométrique alimenté par une tension issue d'un circuit (non représenté) soit ajusté à la valeur voulue pour que le comparateur 29 puisse produire au moment voulu le signal de sortie qui est conduit par la ligne 19 et qui commande l'arrêt de coulée comme on l'a dit au début. Le signal d'arrêt de coulée provoque une rotation rapide du moteur 7, non limitée à un petit angle mais se poursuivant jusqu'au redressement de la poche à une position prédéterminée.

Les éléments du circuit électronique tels qu'ils ont été décrits ci-dessus permettent tous les réglages possibles et on a constaté que l'ensemble du dispositif perçoit les modifications du système dynamique jet-entonnoir d'une façon beaucoup plus rapide que l'oeil humain et réagit en conséquence, ce qui permet d'économiser une quantité de métal importante en réduisant la hauteur de l'entonnoir de remplissage 14.

Le même résultat peut également être atteint avec un circuit électronique dont la constitution est différente de celle du circuit 18 et qui est représenté à la fig. 3. Ce circuit 30 comporte également trois entrées 31, 32 et 33 et une sortie 34 pour le signal d'arrêt de coulée. Les entrées 31 et 32 reçoivent respectivement le signal de niveau provenant du capteur 12 et le signal de débit provenant du capteur 11. Dans un premier groupe de circuits 35, les signaux d'entrée de débit et de niveau sont corrigés afin que les signaux sortant de ces circuits 35 aient respectivement une valeur proportionnelle au débit du jet de coulée 13, débit désigné par $Qj$ et à la quantité de métal contenu dans l'entonnoir entre le niveau 15 et le fond de l'entonnoir. Cette masse est distinguée par $Me$. Dans le circuit 36, qui est un circuit différenciateur, le signal correspondant à la masse de métal $Me$ est différencié tandis que dans le circuit 37, la dérivée $Me'$ de la masse de métal est inversée, de sorte qu'à sa sortie, l'inverseur 37 fournit un signal $\overline{Me'}$. On trouve ensuite dans le circuit 30 un élément 38 qui est un sommateur et dont les entrées reçoivent, d'une part, le signal $\overline{Me'}$ et d'autre part, le signal $Qj$. Ce sommateur fournit donc à sa sortie un signal de débit qu'on peut appeler $Qm$ et qui correspond au débit de métal s'écoulant de l'entonnoir vers le moule. Ce débit est en effet obtenu par l'équation:

$$Qm = Qj - \frac{dMe}{dt} = Qj + \overline{Me'}$$

Le signal correspondant au débit de métal pénétrant dans la cavité du moule $Qm$ est ensuite différencié dans le différenciateur 39, pour donner $Qm'$, puis amplifié par l'un des amplificateurs à gain variable 40. En même temps, le signal $Qm$ passe dans un second amplificateur à gain variable 40 et les deux signaux $Qm'$ et $Qm$ sont fournis à deux des entrées du sommateur-comparateur 41. La troisième entrée de ce sommateur-comparateur reçoit le signal de consigne qui provient de l'entrée 33. On se rend compte que, lorsque le remplissage se termine, $Qm$ tombe à zéro, cependant que Qm' change de signe. En revanche, pendant la coulée, le débit Qm est encore différent de zéro et, d'autre part, il ne subit que de faibles variations, de sorte que Qm' est petit. La somme des signaux Qm + Qm' varie donc brusquement en changeant de signe dès que le remplissage est parfait, ce qui permet de détecter cet état d'une façon particulièrement sensible.

Bien entendu, d'autres variantes pourraient encore être imaginées pour réaliser le circuit électronique du dispositif décrit. De même, il n'est pas nécessaire que les capteurs 11 et 12 soient des capteurs photo-sensibles du genre décrit. Ainsi, par exemple, on pourrait utiliser pour détecter le débit instantané s'écoulant de la poche dans l'entonnoir de coulée une mesure de pesée. Des dispositifs détecteurs par balance existent en effet et sont déjà connus en soi. Par exemple, le poids de la poche 5 pourrait être mesuré par l'intermédiaire de l'effort de traction dans la chaîne 8 et dans la barre de suspension 43. De même, la détection du niveau au moyen de palpeurs mécaniques ou électriques pourrait également, le cas échéant, être envisagée. On pourrait également compléter le circuit électronique par exemple par un analyseur. On a observé en effet que, dans certains cas, par exemple si la cavité du moule présente un épaulement trés prononcé à sa partie supérieure, comme l'épaulement 42, on peut trouver à l'entrée du dernier comparateur du circuit des conditions qui sont semblables á celles qui provoquent l'apparition du signal de fin de coulée avant que le remplissage du moule ne soit effectif. Dans ce cas, il se produit peu de temps apres un second signal de fin de coulée si l'arrêt n'a pas été déclenché lors du premier signal. On peut donc prévoir un analyseur qui élimine l'influence du premier signal de fin de coulée et qui ne laisse agir effectivement sur le dispositif d'arrêt de coulée que le second.

Aux circuits décrits peuvent être associés par exemple un microprocesseur et les interfaces nécessaires permettant de faire varier automatiquement les gains des amplificateurs décrits, de même que les valeurs de référence 28 ou 44. Lors de coulées en séries, une rétroaction automatique peut être introduite, les informations recueillies lors de la coulée d'un moule étant mises à profit pour optimaliser les paramètres de la coulée suivante. Cette dernière possibilité est naturellement utilisée conjointement avec le circuit d'asservissement de coulée déjà mentionné. En particulier, on pourra faire varier le niveau dans l'entonnoir, celui-ci étant par exemple tenu haut pendant la première partie de la coulée, puis abaissé en fin de coulée. Un circuit électronique conventionnel peut calculer la quantité coulée dans un premier moule en effectuant l'intégrale dans le temps du débit du jet mesuré par exemple par le capteur 11 et les circuits qui lui sont associés et donner un ordre de commutation du niveau de référence dans l'entonnoir et/ou aux autres paramètres lorsqu'une proportion prédéterminée de la quantité précédemment calculée est coulée dans le moule suivant. Dans le cas de machines à mouler travaillant avec des modèles changeant par alternance, le processeur mémorisera convenablement les informations. Enfin, on pourra introduire des paramètres particuliers pour les divers modèles à couler au moyen de marques portées par le moule, de cartes perforées, d'informations reçues d'un poste de commande général ou par tout autre moyen propre au cas particulier.

De façon générale, l'expérience a montré qu'en détectant simultanément le débit du jet dans l'entonnoir et le niveau du métal dans cet entonnoir, on peut élaborer avec précision et une grande fiabilité un signal d'arrêt de coulée qui provoque une réaction rapide de la poche dès que les conditions de remplissage total sont réalisées et qui, par conséquent, permet des économies de métal importantes tout en améliorant la régularité du déroulement des opérations de coulée.

## Revendications

1. Dispositif de commande d'une installation de fonderie comportant une poche de coulée motorisée et plusieurs moules fermés en sable ou en coquille pourvus d'un entonnoir de coulée à leur partie supérieure, ces moules étant destinés à être remplis successivement par du métal en fusion qui tombe en jet la poche et forme dans l'entonnoir une accumulation de métal avec une surface libre, caractérisé en ce qu'il comporte au moins deux capteurs mesurant à distance pendant le remplissage respectivement le niveau de ladite surface et le débit du jet et émettant des signaux analogiques correspondant aux valeurs mesurées, un circuit électronique avec au moins deux entrées connectées chacune à un capteur et conduisant les dits signaux analogiques, et avec des moyens de différentation de sommation et d'amplification connectés de façon à élaborer un signal de remplissage qui est une combinaison additive desdits signaux analogiques et de leurs dérivées, ce signal de remplissage variant fortement quand le métal cesse de s'écouler de l'entonnoir vers l'intérieur du moule, une commande d'interruption de coulée susceptible d'être enclenchée ou déclenchée et qui, à l'état enclenché commande la poche motorisée de façon à provoquer l'interruption rapide et forcée du jet, et une connexion entre le circuit et la commande d'interruption de coulée, agencée de façon que le signal de remplissage provoque l'enclenchement de ladite commande quand il dépasse un seuil déterminé.

2. Dispositif selon la revendication 1, caractérisé en ce que les moyens de différenciation de sommation et d'amplification du circuit électronique sont susceptibles d'être pilotés par des signaux d'intervention manuels ou constituant des réponses automatiques à des paramètres de l'installation.

3. Dispositif selon la revendication 1, caractérisé en ce qu'il comporte un émetteur de signaux qui produit un signal de consigne représentant ledit seuil, cet émetteur étant connecté au circuit électronique et son fonctionnement étant dépendant d'au moins un paramètre de l'installation.

4. Dispositif selon la revendication 1, caractérisé en ce que les capteurs sont des capteurs optiques mesurant le reyonnement visible et/ou infrarouge émis dans une direction donnée par une portion de surface d'aire déterminée du métal en fusion.

5. Dispositif selon la revendication 1, caractérisé en ce que le circuit électronique comprend deux différenciateurs (24) agissant chacun sur un des signaux d'entrée et deux sommateurs (25, 27), en ce qu'un sommateur (27) reçoit le signal de débit et sa dérivée et inverse la somme de ces signaux, et en ce que l'autre sommateur (25) reçoit, d'une part, le signal de niveau et sa dérivée, et d'autre part, l'inverse du signal sortant du premier sommateur, la sortie du second sommateur fournissant le signal de remplissage.

6. Dispositif selon la revendication 5, caractérisé en ce que le circuit électronique comprend un multiplicateur (26) permettant d'effectuer l'élévation au carré du signal d'entrée, présent à une borne (21), ou le produit de deux signaux émis par deux capteurs disposés selon des directions différentes l'une de l'autre, et en ce que le ou les capteurs qui génèrent le ou les signaux d'entrée correspondants au débit de métal tombant dans l'entonnoir de coulée sont des capteurs photosensibles mesurant la largeur du jet de coulée tombant de la poche dans ledit entonnoir.

7. Dispositif selon la revendication 1, caractérisé en ce que le circuit électronique comporte un premier différenciateur (36) qui dérive le signal d'entrée (31) correspondant au niveau, après avoir été traité par le circuit de correction de proportionnalité (35), un premier sommateur (38) qui ajoute l'inverse dudit signal dérivé au signal d'entrée (32) correspondant au débit après avoir lui aussi été traité par un circuit de correction (35) à caractéristique quadratique et qui fournit un signal intermédiaire ($Qm$) correspondant au débit de l'entonnoir vers le moule, un différenciateur (39) qui dérive le signal intermédiaire sortant du premier sommateur, le signal de remplissage étant la somme du signal intermédiaire ($Qm$) et de sa dérivée ($Qm'$) expressin the variation in flow from noir.

8. Dispositif selon la revendication 2, caractérisé en ce que le circuit électronique comporte en outre des amplificateurs à gain variable dans les entrées parallèles d'au moins un des sommateurs.

9. Dispositif selon la revendication 1, caractérisé en ce que le capteur de débit comporte un instrument de pesée de la poche et/ou du moule et des moyens pour élaborer un signal de débit à partir des variations du poids de la poche et/ou du moule.

10. Dispositif selon les revendications 3 et 8, caractérisé par un circuit auxiliaire d'analyse adaptant automatiquement un ou plusieurs paramètres du système, soit gain des amplificateurs et valeur du signal de référence, en fonction des caractéristiques du moule, ces informations étant reçues de l'extérieur et/ou auto-élaborées après observation du comportement du système lors des coulées précédentes selon un programme d'analyse incorporé.

11. Dispositif selon la revendication 10, caractérisé en ce que le circuit auxiliaire d'analyse comporte un microprocesseur.

**Claims**

1. Device for controlling a foundry installation comprising a motorized pouring ladle and a number of closed sand or permanent moulds provided with a sprue cup at the upper part thereof, these moulds being intended to be filled successively by molten metal which fall in a stream from the ladle and forms in the sprue cup an accumulation of metal having a free surface, characterized in that it comprises at least two sensors telemetering the level of the said surface and the flow of the stream, respectively, during the filling and transmitting analog signals corresponding to the values measured, an electronic circuit with at least two inputs, each connected to a sensor and conducting the said analog signals, and with differentiation, summation, and amplification means connected so as to produce a filling signal which is an additive combination of the said analog signals and of their derivatives, this filling signal varying greatly when the metal ceases to flow out of the spruce cup towards the interior of the mould, a pouring cut-off control capable of being switched on or switched off and which, in the switched-on condition, controls the motorized ladle so as to cause the rapid and forced cut-off of the stream, and a connection between the circuit and the pouring cut-off control, arranged so that the filling signal causes the switching-on of the said control when the signal exceeds a determined threshold.

2. Device according to claim 1, characterized in that the differentiation, summation, and amplification means of the electronic circuit are capable of being steered by intervention signals which are manual or which constitute automatic responses to parameters of the installation.

3. Device according to claim 1, characterized in that it comprises a signal transmitter which produces a reference signal representing the said threshold, this transmitter being connected to the electronic circuit and its operation being dependent upon at least one parameter of the installation.

4. Device according to claim 1, characterized in that the sensors are optical sensors measuring the visible and/or infrared radiation emitted in a given direction by a surface portion of determined area of the molten metal.

5. Device according to claim 1, characterized in that the electronic circuit comprises two differentiators (24), each acting upon one of the input signals, and two adders (25, 27), in that one adder (27) receives the flow signal and its derivative and inverts the sum of these signals, and in that the other adder (25) receives, on the one hand, the level signal and its derivative and, on the other hand, the inverse signal leaving the first adder, the output of the second adder supplying the filling signal.

6. Device according to claim 5, characterized in that the electronic circuit comprises a multiplier (26) which allows the squaring of the input signal present at a terminal (21) to be performed, or the product of two signals transmitted by two sensors disposed according to directions different from one another, and in that the sensor or sensors which generate the input signal or signals corresponding to the flow of metal falling into the sprue cup are photosensitive sensors measuring the width of the pouring stream falling from the ladle into the said sprue cup.

7. Device according to claim 1, characterized in that the electronic circuit comprises a first differentiator (36) which derives the input (31) signal corresponding to the level, after having been processed by the proportionality correction circuit (35), a first adder (38) which adds the inverse of the said derived signal to the input (32) signal corresponding to the flow after its also having been processed by a quadratic-characteristic correction circuit (35), and which supplies an intermediate signal (Qm) corresponding to the flow from the sprue cup towards the mould, a differentiator (39) which derives the intermediate signal leaving the first adder, the filling signal being the sum of the intermediate signal (Qm) and of its derivative (Qm') expressing the variation in flow from the sprue cup.

8. Device according to claim 2, characterized in that the electronic circuit further comprises variable-gain amplifiers in the parallel inputs of at least one of the adders.

9. Device according to claim 1, characterized in that the flow sensor comprises an instrument for weighing the ladle and/or the mould and means for producing a flow signal starting from the variations in weight of the ladle and/or the mould.

10. Device according to claims 3 and 8, characterized by an auxiliary analysis circuit automatically adapting one or more parameters of the system, say, gain of the amplifiers and value of the reference signal, as a function of the characteristics of the mould, these data being received from outside and/or self-produced after observation of the behaviour of the system at the time of preceding castings according to an incorporated analysis program.

11. Device according to claim 10, characterized in that the auxiliary analysis circuit comprises a microprocessor.

**Patentansprüche**

1. Vorrichtung zur Steuerung einer Giessanlage, die eine motorisierte Giesspfanne und mehrere als Sandformen oder Kokillen ausgebildete, geschlossene Giessformen aufweist, welche an ihrem Oberteil mit einem Eingusstrichter versehen sind, wobei diese Giessformen dazu bestimmt sind, aufeinanderfolgend mit geschmolzenem Metall gefüllt zu werden, das in einem Strahl von der Pfanne herabfällt und im Trichter eine Metallanhäufung mit freier Oberfläche bildet, dadurch gekennzeichnet, dass sie aufweist: mindestens zwei Sensoren, die während der Einfüllung aus der Ferne die Pegelhöhe der besagten freien Oberfläche bzw. die Durchflussmenge des Strahles messen und den Messwerten entsprechende Analog-Signale abgeben; einen elektronischen Kreis mit mindestens zwei Eingängen, welche je mit einem sensor verbunden sind und die besagten Analog-Signale leiten, und mit differenzier-, Summierund Verstärkermitteln, die in der Weise angeschlossen sind, dass sie ein Füllsignal erarbeiten, das eine additive Kombination der besagten Analog-Signale und deren Ableitungen ist, wobei dieses Füllsignal stark variiert, wenn das Metall aufhört, vom Trichter in das Innere der Giessform zu fliessen; eine ein- und ausschaltbare Giesunterbrechungssteuerung, die im eingeschalteten Zustand die motorisierte Pfanne im Sinne des Herbeiführens der raschen und forcierten Unterbrechung des Strahles steuert, und eine Verbindung zwischen dem Kreis und der Giessunterbrechungssteuerung, welche Verbindung derart ausgebildet ist, dass das Füllsignal die Einschaltung der besagten Steuerung bewirkt, wenn es eine bestimmte Schwelle überschreitet.

2. Vorrichtung nach Anspruch 1, dadurch gekennzeichnet, dass die Differenzier-, Summier- und Verstärkermittel des elektronischen Kreises durch manuelle oder durch solche Beeinflussungssignale beeinflussbar sind, die automatische Antworten auf Parameter der Anlage sind.

3. Vorrichtung nach Anspruch 1, dadurch gekennzeichnet, dass sie einen Signalgeber aufweist, der ein die besagte Schwelle darstellendes Signal abgibt, wobei dieser Geber an den elektronischen Kreis angeschlossen ist unde seine Arbeitsweise von mindestens einem Parameter de Anlage abhängig ist.

4. Vorrichtung nach Anspruch 1, dadurch gekennzeichnet, dass die Sensoren optische Sensoren sind, welche die sichtbare und/oder infrarote Strahlung messen, die in einer gegebenen Richtung durch einen Flächenteil bestimmter Grösse des geschmolzenen Metalles abgegeben wird.

5. Vorrichtung nach Anspruch 1, dadurch gekennzeichnet, dass der elektronische Kreis zwei je auf eines der Eingangsignale einwirkende Differenzierglieder (24) und zwei Summierglieder (25, 27) aufweist, dass eines (27) dieser Summiierglieder das Durchflussmengensignal und dessen Ableitung aufnimmt und die Summe dieser Signale umkehrt, wogegen das andere Summierglied (25) einerseits das Pegelhöhensignal und dessen Ableitung und andererseits die Umkehrung des das erste Summierglied verlassenden Signales aufnimmt, und dass der Ausgang des zweiten Summiergliedes das Füllsignal liefert.

6. Vorrichtung nach Anspruch 5, dadurch gekennzeichnet, dass der elektronische Kreis ein Multiplizierglied (26) aufweist, welches die Quadrierung des an einem Anschluss (21) vorliegenden Eingangswertes oder die Multiplikation von zwei Signalen ermöglicht, die durch zwei nach voneinander verschiedenen Richtungen angeordnete Sensoren abgegeben werden, und dass der oder die Sensoren, welche das oder die der Durchflussmenge des in den Eingusstrichter fallenden Metalles entsprechende(n) Eingangsignal(e) erzeugen, lichtempfindliche Sensoren sind, welche die Breite des von der Pfanne in besagten Trichter einfallenden Giesstrahles messen.

7. Vorrichtung nach Anspruch 1, dadurch gekennzeichnet, dass der elektronische Kreis nebst einem ersten Differenzierglied (36), welches die Ableitung des der Pegelhöhe entsprechenden Eingangssignals (31) bildet, nachdem dieses durch den Proportionalitäts-Korrigierkreis (35) behandelt worden ist, ein erstes Summierglied (36), welches den Kehrwert des abgeleiteten Signales dem der Durchflussmenge entsprechenden Eingangssignal (32) hinzuaddiert, nachdem auch dieses durch einen Korrigierkreis (35) mit quadratischer Charakteristik behandelt worden ist, und welches ein der Durchflussmenge aus dem Trichter in die Giessform entsprechendes Zwischensignal (Qm) liefert, und ein Differenzierglied (39) aufweist, welches die Ableitung des das erste Summierglied verlassenden Zwischensignales bildet, wobei das Füllsignal aus der Summe des Zwischensignales (Qm) und dessen die Aenderung der Trichterdurchflussmenge ausdrückenden Ableitung besteht.

8. Vorrichtung nach Anspruch 2, dadurch gekenn-zeichnet, dass der elektronische Kreis ausserdem Verstärker mit variablem Verstärkungsfaktor in den parallelen Eingängen mindestens eines der Summierglieder aufweist.

9. Vorrichtung nach Anspruch 1, dadurch gekennzeichnet, dass der Durchflussmengensensor ein Instrument zum Wägen der Pfanne und/oder der Giessform aufweist sowie Mittel zum Erarbeiten eines Durchflussmengensignales ausgehend von den Aenderungen des Gewichtes der Pfanne und/oder der Giessform.

10. Vorrichtung nach den Ansprüchen 3 und 8, gekennzeichnet durch einen Hilfsanalysierkreis, der automatisch einen oder mehrere Parameter des Systems, etwa den Verstärkungsfaktor der Verstärker und den Wert des Bezugssignales, adaptiert in Funktion der Charakteriken der Giessform, wobei diese Informationen von aussen erhalten und/oder aufgrund eines einverleibten Analysierprogramms auto-erarbeitet werden, nach Beobachtung des Verhaltens des Systems anlässlich des Abgiessens vorangehender Giessformen.

11. Vorrichtung nach Anspruch 10, dadurch gekennzeichnet, dass der Hilfsanalysierkreis einen Mikroprozessor aufweist.

## FIG. 1

**4**

7  16
8
5
43
6
13
11  12
15
14
42
9
10
1
2
3  3

## FIG. 3

31
35  Me  36  37  -M'é  38  Qm  39  40  Qm'  41  34
32  35  Qj
40  Qm
30
33
44

FIG. 2

0 001 142.